# EUROPÄISCHE PATENTANMELDUNG

(11) **EP 4 837 717 A1**
(43) Veröffentlichungstag der Anmeldung: **11.11.2026**
(21) Anmeldenummer: 25174946.1
(22) Anmeldetag: 08.05.2025
(51) Int. Cl.: B27N 3/00, C08K 3/36, C08L 97/02, C09J 161/24, C09J 189/00

(54) **BINDEMITTEL FÜR CELLULOSEHALTIGE MATERIALIEN UND VERBUNDWERKSTOFFPRODUKTE DIESE ENTHALTEND**

(71) Anmelder: ECCO Adhesives Sp.z.o.o, 37-552 Mlyny (PL)
(72) Erfinder: GIOUROUSEF, Leonidas, 01034 Kyiv (UA)
(74) Vertreter: Kröncke, Rolf

(57) **Zusammenfassung**

In einem ersten Aspekt richtet sich die vorliegende Erfindung auf Hydrophobierungsmittel für cellulosehaltige Materialien, diese enthalten mindestens phenolische Biopolymere, organische Säure, Alkalisilikate, Alkalihydroxid und Wasser. In einem weiteren Aspekt werden Bindemittelzusammensetzungen für cellulosehaltige Materialien bereitgestellt, wobei diese Bindemittelzusammensetzungen erfindungsgemäße Hydrophobierungsmittel enthalten oder aus diesem bestehen. Schließlich werden Verbundwerkstoffprodukte aus cellulosehaltigem Ausgangsmaterial mit erfindungsmäßen Bindemittel bereitgestellt.

## Beschreibung

In einem ersten Aspekt richtet sich die vorliegende Erfindung auf Hydrophobierungsmittel für cellulosehaltige Materialien, diese enthalten mindestens phenolische Biopolymere, organische Säure, Alkalisilikate, Alkalihydroxid und Wasser. In einem weiteren Aspekt werden Bindemittelzusammensetzungen für cellulosehaltige Materialien bereitgestellt, wobei diese Bindemittelzusammensetzungen erfindungsgemäße Hydrophobierungsmittel enthalten oder aus diesem bestehen. Schließlich werden Verbundwerkstoffprodukte aus cellulosehaltigem Ausgangsmaterial mit erfindungsmäßen Bindemittel bereitgestellt.

### Stand der Technik

Bei der Herstellung von holzbasierten Verbundwerkstoffen und Holzwerkstoffen im Allgemeinen sowie Werkstoffe aus oder enthaltend cellulosehaltige Materialien, spielen Bindemittel eine wesentliche Rolle. Beschränkt wird der Einsatz der Bindemittel durch Restriktionen der VOC-Richtlinie, um die Emission von VOC (flüchtigen organischen Verbindungen) oder VVOC (sehr flüchtigen organischen Verbindungen) zu begrenzen. In Abhängigkeit von der Art und dem Zustand der eingesetzten cellulosehaltigen Materialien, wie dem eingesetzten Lignocellulosen, der Holzarten, der Leimungsdauer, der Leimungsbedingungen des Holzes bzw. entsprechenden cellulosehaltigen Materialien kommen in unterschiedlich chemischen Zusammensetzungen und Mengen VOC oder VVOC vor.

Weiterhin werden diese VOC und VVOC, insbesondere Formaldehyd bei Verwendung von Bindemitteln auf Basis von Aminoplasten freigesetzt. Da Formaldehyd wesentlicher Vertreter der VVOC ist, konzentriert man sich in der Bindemittelindustrie auf die Reduzierung der Emission hiervon. Entsprechend werden übliche Bindemittel, hier Fomaldehyd-basierte Harze, wie UF (Urea- Formaldehyd) oder MUF (Melamin-Urea-Formaldehyd-Harze) weiter entwickelt.

Als Alternative zu formaldehydhaltigem Bindemittel bzw. Harze wurden isocyanatbasierte Bindemittel entwickelt, z.B. PMDI. Problem dieser Bindemittel sind aber hohe Preise sowie die dadurch Verwendung hiervon ergebenen Schutzmaßnahmen, da Isocyanate als Gefahrstoffe einerseits gelten und andererseits z.B. im Brandfall Blausäure entstehen können. Entsprechend sind bei Verarbeitung von isocyanatbasierten Bindemitteln hohe Schutzmaßnahmen notwendig.

Es wurden weitere Bindemittel, z.B. proteinhaltige Bindemittel entwickelt. Bekannt sind proteinhaltige Bindemittel auf tierischer als auch auf pflanzlicher Basis. Diese benötigen keine Zugabe von Formaldehyd zur Umsetzung, sind allerdings nicht universell einsetzbar.

Die Hydrophobierung von cellulosehaltigen Materialien und Produkten hieraus, spielt eine wesentliche Rolle. Werkstoffe mit cullulosehaltigen Materialien werden klassifiziert z.B. einer Klassifizierung in P1 bis P7 bei Spanplatten. Während klassifizierte Werkstoffe und Produkte in P1, P2 oder P4 und P6 für Trockenbereiche eingesetzt werden dürfen, stellt die Klassifizierung P3, P5 bzw. P7 bei solchen Materialien die Eignung für Feuchtbereiche dar. Gerade um entsprechende Verbundwerkstoffe für den Feuchtbereich bereitzustellen, ist eine entsprechende Hydrophobierung notwendig. Ein Problem dieser Materialien bei Einsatz in Feuchtbereichen ist die Dickenquellung aber auch die notwendige Wasserresistenz. Seit Jahren wird in der Holzwerkindustrie Wachsdispersionen als Additiv zur Hydrophobierung eingesetzt, üblicherweise mit Mengenanteilen von 0,5 bis 2,5 % auf atro holz. Allerdings erreichen solche Holzwerkstoffprodukte nicht die Klassifizierung für Feuchtbereiche z.B. P3 bei Spanplatte, MDF-H bei Faserplatten und auch keine OSB 3. Vielmehr schaffen solche Hydrophobierung mit Wachsdispersionen lediglich ein verringern der Dickenquellung von Holzwerkstoffen bei hoher Luftfeuchtigkeit.

Es wurden verschiedene andere Ansätze gemacht, um eine ausreichende Hydrophobierung der Werkstoffe für Feuchtbereich zu erreichen, also die Wasserresistenz der Holzwerkstoffe zu verbessern. Bei Harnstoff-Formaldehyd-Harzen (UF-Harz), das das weltweit häufigste eingesetzte Bindemittel für cellulosehaltige Materialien ist, wird z.B. in hohen Anteilen Melamin zugesetzt, um eine entsprechende Wasserresistenz zu erhalten. Formaldehyd-Harz gebundene Holzwerkstoffe, wie Spanplatte, Faserplatten, Sperrhölzer etc. weisen eine ständige Formaldehydausgasung auf, diese wird trotz Einhaltung der entsprechende Richtlinie EN120 aus Sicht des Verbraucherschutzes als problematisch eingestuft. Tatsächlich konnte in zahlreichen Studien gezeigt werden, dass eine Karzinombildung und eine Schädigung des Nervensystems beobachtet wurde bei entsprechendem Formaldehydkonzentrationen. Entsprechend wurden die Grenzwerte für Formaldehyd 2023 von E1=0,1 ppm auf E0,5=0,06 ppm gesenkt.

Neben den genannten UF Harzen werden alternativ Phenol-Formaldehyd Harze (PUF) eingesetzt, die auf erhöhte Wasserresistenz des erhaltenen Holzwerkstoffes ausgelegt sind. Dieses Bindemittel wird hauptsächlich in der Sperrholzindustrie eingesetzt.

Als Alternative wird die bereits genannten Isocyanat-basierten Bindemittel, z.B. PMDI verwendet, diese weisen eine hohe Wasserbeständigkeit auf. Zwar weisen Isocyanate Vorteile gegenüber den MUF/PUF Harzen auf, da sie mit den cellulosehaltigen Materialien, Lignin und Cellulose, eine chemische Verbindung eingehen. Allerdings ist der Einsatz von Isocyanaten mit erheblichen Beeinträchtigungen verbunden. Denn bei der Herstellung der Verbundwerkstoffprodukte sind hohe Schutzmaßnahmen notwendig, die komplette Fertigungsstraße wird durch benetzte Holzpartikel kontaminiert, die Arbeiter müssen vor Ort Vollschutzkleidung tragen. Isocyanat ist hoch toxisch und kann die Atemwege angreifen.

Die genannten Isocyanatbindemittel unterscheiden sich auch in ihren Verklebungseigenschaften von den entsprechenden UF-Harzen. UF-Harze sind Füllklebestoffe, die z.B. die Hohlräume zwischen den Fasern von Spänen ausfüllen und die Holzpartikel höchstmöglich umschließen. Um entsprechend geeignete Holzwerkstoffe mit MUF Harzen herzustellen, die die Quellwerte nach EN 322 genügen, und auch einen Kochtest bestehen, wird eine erhöhte Menge an Bindemittel (bis 30%) dazu benötigt. Im Gegensatz dazu Isocyanat-basierte Bindemittel, die eine Kontaktverklebung erlauben. Hier ist allerdings ein feines Zerstäuben der Isocyanate nötig, um die entsprechende Vernetzung mit Cellulose bzw. Lignin zu erreichen.

Wie ausgeführt wird bei UF- Harzen Melamin als Hydrophobierungsmittel eingesetzt. Melamin lässt sich nicht in Wasser aber gut in Formaldehyd lösen. Die eingesetzten Mengen an Melamin bezogen auf das Gewicht des Leims liegen üblicherweise im Bereich von 4 bis 24 Gew.-%. Allerdings ist aufgrund der bekannten Nebenwirkungen für Melamin mittelfristig mit einem Verbot als Additiv für Holzwerkstoffe zu rechnen. Darüber hinaus erfordert die Melaminproduktion hohe Energiekosten, sodass derzeit im Wesentlichen ostasiatisches Melamin aus Kostengründen eingesetzt wird.

Der Markt fordert daher sogenannte NAF-Bindemittel (non added Formaldehyd Bindemittel). Dabei wird versucht, diese aus möglichst naturnahen Rohstoffen bereitzustellen. Entsprechend werden Bindemittel auf Proteinbasis, sowohl auf tierischer als auch auf pflanzlicher Proteinbasis, bereitgestellt. Allerdings fehlt entsprechenden Proteinbindemittel (pflanzliche Proteinbindemittel) die notwendige Hydrophobierung, sodass die geforderte Wasserresistenz nicht erreicht wird. Derzeit werden entsprechende Holzwerkstoffe nur im Innenbereich, also z.B. als P1 und P2 Spanplatten eingesetzt.

Bei Hydrophobierungsmitteln ist es darüber hinaus wichtig, dass diese Hydrophobierungsmittel auch für die Herstellungsverfahren geeignet sind. Die Herstellung von Holzwerkstoffen erfordert eine Wärmebehandlung mit hohe Presstemperaturen. Diese Wärmebehandlung liegt üblicherweise in einem Bereich von über 180°C, insbesondere 220°C und höher. Die wirtschaftlichen Anforderungen erfordern es weiterhin, dass der Pressfaktor z.B. bei den MDF/HDF bei 5,5 s/mm Plattendicke liegen, wie bei Spanplatten z.B. Pressfaktoren von unter 4 s/mm. Solche Geschwindigkeiten können nur durch hohe Presstemperaturen, üblicherweise im Bereich von 220°C bis 240°C erreicht werden. Solche hohen Temperaturen führen aber zu erhöhten Emissionen an VOC und VVOC im Holz und Bindemittel. Auch um dieses Problem zu überwinden, wurde entsprechende alternative Bio-Bindemittel entwickelt, z.B. solche auf Basis von Protein-Hydroxid-Aldehyd-Harz, aber auch solche mit Proteinen und chemischen Quervernetzen z.B. auf Basis von proteinogenen Aminosäuren und chemischen Komponenten und Protein als Füllstoff.

EP 1742542 beschreibt ein Verfahren zur Herstellung eines Klebers auf Basis denaturierter Proteine mit Melamin-Formaldehyd. WO2022/0197902 beschreibt ein Verfahren zur Herstellung eines wässrigen Bindemittels aus Pflanzenproteinen, Glycerin, Peroxid, Harnstoff, Wasserglas und modifiziertes Lignin. Die dort beschriebenen hergestellten Holzwerkstoffe zeigten aber, dass die entsprechenden P3 Standards für Spanplatte und MDF-H bei Faserplatten nicht erreicht wurden. Ebenso wurde der Kochtest gemäß EN 312-1 nicht bestanden.

DE102005051350 A1 zeigt einen Ligninkleber, der aus Ligninsulfonat besteht. Auch dieser Melamin-basierte Kleber erfüllt die Voraussetzungen der EN322 nicht, die Inhaltsstoffe sind stark hydrophil.

Es gibt derzeit keine entsprechenden Bio Bindemittel, die stark hydrophobe Eigenschaften aufweisen und den Anforderungen des EN 322 genügen, einschließlich ein Kochtest nach EN1087-1, die VOC-Werte einhält, als nachhaltig angesehen werden kann und technische Werte gemäß EN312 erreicht unter Produktionsbedingungen, die solche mit herkömmlichen Bindemitteln entspricht, insbesondere Produktionsgeschwindigkeiten auf vorhandenen Plattenproduktionsanlagen.

Aufgabe der vorliegenden Erfindung ist es daher, entsprechend geeignete Hydrophobierungsmittel für cellulosehaltige Materialen sowie Zusammensetzungen, die die solche Hydrophobierungsmittel enthalten oder daraus bestehen, bereitzustellen mit entsprechend Werkstoffen aus cellulosehaltigen Materialien und solche Bindemittel, die den Anforderungen an Wasserresistenz und Kochfestigkeit genügen.

### Beschreibung der Erfindung

In einem ersten Aspekt richtet sich die vorliegende Erfindung auf ein Hydrophobierungsmittel für cellulosehaltige Materialien enthaltend
a. Phenolische Bioplymere;
b. Organische Säure;
c. Alkalisilikate;
d. Alkalihydroxid;
e. Wasser.

Das erfindungsgemäße Hydrophobierungsmittel allein als Bindemittel oder als Additiv zu bekannten Bindemitteln ermöglicht die Verbesserung der Wasserresistenz von Verbundwerstoffprodukten, insbesondere Platten und Profile um diese die Eignung für Feuchtbereiche zu erlauben.

Insbesondere zeigt es sich, dass dieses Mittel geeignet ist, bei hohen Produktionsgeschwindigkeiten mit möglichst kleinen Pressfaktoren eingesetzt zu werden unter Beibehaltung der gewünschten mechanischen Stabilität der erhaltenen Verbundwerkstoffprodukte und mit hoher Wasserresistenz, sodass entsprechende Normen für Feuchträume erfüllt werden. Insbesondere vorteilhaft ist, dass das Hydrophobierungsmittel zu einem wesentlichen Anteil aus nachwachsenden Bestandteilen besteht, sodass entsprechende ökologische Anforderungen erfüllt und möglichst keine oder möglichst wenig fossile Inhaltstoffe verwendet werden. Diese Hydrophobierungsmittel sind entsprechende NAF Produkte, die nur im sehr geringen Umfang zur Emission von VVC und VVOC beitragen. Insbesondere zeigte sich aber überraschend, dass das erfindungsmäße Hydrophobierungsmittel auch als Additiv für Bindemittel auf Basis von Proteinen, sowohl tierischen aber auch pflanzlichen Proteinen, geeignet ist, insbesondere für die im Markt befindlichen Bio-Bindemitteln üblicherweise auf Basis von Proteinharzen, wie Protein-Hydroxyaldehyd-Harz. Diese Bindemittel können durch das erfindungsgemäße Hydrophobierungsmittel derart modifiziert werden, dass die damit hergestellt Erzeugnisse die Anforderungen zur Wasserbeständigkeit und Kochfestigkeit gemäß den Richtlinien erfüllt sind. Das Hydrophobierungsmittel kann dabei kombiniert mit anderen entsprechenden Additiven im Bindemittel eingesetzt werden oder als Ersatz für entsprechender Hydrophobierungsmittel in bekannten Bindemitteln. Das erfindungsgemäße Hydrophobierungsmittel kann dabei einfach mit herkömmlichen Bindemitteln vermischt werden, ohne die Konsistenz gravierend zu verändern.

Entsprechend ist die Verwendung z.B. beim Leimauftrag mit herkömmlich Anlagen und Pumpen möglich. Vorzugsweise wobei der Feststoffgehalt des Leimes kleiner 65 % ist und die Viskosität nicht über 600mPas liegt.

Das Hydrophobierungsmittel erlaubt es bei Bindemittel auf Basis von pflanzlichen Proteinen die notwendigen Normen zur Wasserresistenz, DEN622 und DEN312 zu erreichen, ohne dass die Zugabe von weiteren chemischen Komponenten notwendig ist, wie Furan, Aldehyden, Amino-Epichlorhydrin oder anderen toxischen Stoffen.

Wie gesagt, kann das erfindungsgemäße Hydrophobierungsmittel erstmals, bei Verwendung von Bindemittel auf Basis von pflanzlichen Proteinen die Wasserresistenz von entsprechend hergestellten Verbundwerkstoffprodukten auf Basis cellulosehaltiger Materialien, eine normerfüllende Wasserresistenz, bereitstellen.

Es zeigte sich aber auch, dass z.B. bei Verwendung in bekannten MUF Harzen der Einsatz von Melamin durch Ersatz des Melamins mit dem Hydrophobierungsmittel verringert und somit das erfindungsgemäße Hydrophobierungsmittel als Melaminersatz teilweise oder vollständig bei MUF-Harzen eingesetzt werden kann.

Es zeigte auch, dass bei Bindemitteln auf Isocyanatbasis die Menge an Isocyanat verringert werden kann, und durch das erfindungsgemäße Hydrophobierungsmittel substituiert werden kann.

Bei Verwendung des erfindungsgemäßen Hydrophobierungsmittels mit pflanzlichen Proteinbindemittel konnte die gewünschte Wasserresistenz erreicht werden, somit können die so erhaltenen Verbundwerkstoffprodukte nicht nur im Innenbereich sondern auch in Feuchtbereichen eingesetzt werden.

Vorliegend werden unter dem cellulosehaltiges Material "Materialien" verstanden, die Cellulose, Hemicellulose, Holocellulose oder Lignocellulose enthalten. Cellulosehaltige Materialien sind unter anderem Holz, Zellstoff, Stroh usw. Für die Herstellung von entsprechenden Holzwerkstoffen, Werkstoffplatten sind die entsprechenden Ausgangsmaterialien also cellulosehaltige Materialien z.B. solche aus Holzspänen, Sägespäne, Holzfasern und Holzfurnieren. Es können als cellulosehaltige Materialien aber auch solche aus einjährigen Pflanzen wie Stroh, Flachs, Hanf, Kokos usw. eingesetzt werden.

Bei den entsprechenden cellulosehaltigen Materialien kann es sich um solche handeln, die aus Frischholz oder aus recycelten Materialien gewonnen werden.

Vorliegend wird, soweit nicht anders ausgeführt, unter dem Begriff " Bindemittel" geeignete Bindemittel zur Verwendung in der Holzwerkstoffindustrie oder als Bindemittel für Werkstoff auf Basis von cellulosehaltigen Materialien bezeichnet. Bekannte Vertreter hiervon sind die bereits genannten Formaldehyd-Bindemittel, wie z.B. UF-, MUF-, oder PMUF-Harzen. Weitere übliche Bindemittel umfassen die Isocyanat-basierten Bindemittel, einschließlich solche auf Basis von Isocyanaten, wie PMDI, Klebstoff auf Basis von Polyurethan oder auch Tannin-Formaldehydklebstoffe. Weitere Klebestoffe umfassen die bereits genannten proteinhaltigen Bindemittel, insbesondere solche auf pflanzlicher Basis.

Unter phenolischen Biopolymere, auch als phenolische Oligomere bezeichnet, sind insbesondere solche Komponenten zu verstehen, wie sie von Lignin abgeleitet sind. Bevorzugt weisen dabei die phenolischen Biopolymere eine gewichtsmittlere molare Masse im Bereich von 1000 bis 5000 g/ Mol und insbesondere von 2000 bis 4000 g/Mol, wie 2500 bis 3000 g/Mol auf.

Geeignete phenolischen Biopolymere enthaltende Komponenten sind insbesondere Lignocellulosen, die gemäß nach Organosolv-Verfahren, auch als Soda-Verfahren bezeichnet, Minox-Verfahren, den Formacell-Verfahren, den Organocell-Verfahren und vorzugsweise den Sulphatverfahren, auch als Kraft-Prozess erhältlich sind. Insbesondere ist ein geeignetes phenolisches Biopolymer ein Kraft-Lignin. Die phenolischen Biopolymere enthaltende Komponente, vorzugsweise Kraft-Lignin, kann insbesondere in Form eines sprühgetrockneten Pulvers eingesetzt werden. Weiter ist bevorzugt, dass die phenolische Biopolymere enthaltene Komponente, insbesondere Kraft-Lignin in einer Menge von 5 bis 50 Gew.-% bezogen auf das Gesamtgewicht des Hydrophobierungsmittels eingesetzt wird, wie in einer Menge von 7 Gew.- % bis 25 Gew.-%.

Geeignete organische Säuren sind dem Fachmann bekannt. Diese organischen Säuren schließen insbesondere Säuren ein, die einen pH-Wert < 3 aufzeigen und Beispiel hierfür sind Carbonsäuren im Allgemeinen einschließlich Zitronensäure, Milchsäure, Pikrinsäure, Essigsäure, und Ascorbinsäure oder Mischungen hiervon. Die Mengen an zugefügten organischen Säuren ist dabei z.B. in einem Bereich von 1,0 bis 4,0 Gew.-%, wie 1,5 bis 3 Gew.-5 bezogen auf das Gesamtgewicht des erfindungsgemäßen Hydrophobierungsmittels.

Als weitere Komponente weist das erfindungsgemäße Hydrophobierungsmittel Alkalisilikate auf. Dem Fachmann sind die entsprechenden Alkalisilikate bekannt. Geeignete Vertreter solcher Alkalisilikate ist insbesondere Wasserglas, wie Kaliumwasserglas oder Natriumwasserglas oder Mischungen hiervon. Die Alkalisilikate können dabei in einer Menge von 2 bis 6 Gew.-%, wie 2,5 bis 5 Gew.-% z.B. bei 2 bis 4 Gew.-5 eingesetzt werden.

Die erfindungsgemäße Alkalisilikate sind entsprechend wasserlöslich, das erfindungsgemäße Hydrophobierungsmittel ist eines auf Wasserbasis.

Weiterhin enthält das erfindungsgemäße Hydrophobierungsmittel ein Alkalihydroxid. Geeignete Hydroxide sind insbesondere Natriumhydroxide und Kaliumhydroxid. Das entsprechende Alkalihydroxid liegt dabei bevorzugt in einer Menge von 0,5 bis 5,0 Gew.-% z.B. in einer Menge von 1,5 bis 3 Gew.-% bezogen auf die Gesamtmenge des Hydrophobierungsmittels vor.

Schließlich umfasst das erfindungsgemäße Hydrophobierungsmittel Wasser als geeignetes Lösungsmittel. Es liegt entsprechend in einer Menge vor, bis zu 100 Gew.-% des Hydrophobierungsmittels.

In einer Ausführungsform enthält das erfindungsgemäße Hydrophobierungsmittel weiterhin Metallsalz, wie ein Kupfersalz, Eisensalz oder Mangansalz oder Mischungen dieser Salze. Insbesondere Kupfersalze zeigten sich als besonders geeignet. Diese Metallsalze wie Kupfersalze liegen insbesondere in dem Hydrophobierungsmittel vor, wenn dieses Bestandteil von Bindemitteln für Proteinbindemittel insbesondere auf pflanzlicher Basis ist.

Ein besonders geeignetes Kupfersalz ist dabei ein Kupfer (II)- Chlorid-Dihydrat. Andere geeignete Teilsalze, insbesondere Kupfersalze sind: Kupfer(II)-acetat, Kupfer(II)-nitrat-Hemipentahydrat .

In einer weiteren Ausführungsform kann das erfindungsgemäße Hydrophobierungsmittel weiterhin ein Organosilan enthalten. Geeignete Organosilane sind dem Fachmann bekannt und sind kommerziell von verschiedenen Unternehmen erhältlich. Ein typisches Beispiel hierfür ist das Produkt DYNASILAN der Evonik Industries AG. Es handelt sich bei diesem Organosilan um bifunktionelle Verbindungen, die reaktive organische Gruppe, z.B. organische Epoxide aufweisen und dazu hydrolisierbare Methoxysilyl-Gruppen.

Die Organosilane werden z.B. in einer Menge von 1 Gew.-% bis 8 Gew-% bevorzugt, 2 bis 5 Gew.-% in dem erfindungsgemäßen Hydrophobierungsmittel eingesetzt.

In einer weiteren Ausführungsform der erfindungsgemäßen Hydrophobierungsmittel kann weiterhin ein Tensid vorliegen. Dieses Tensid kann z.B. in einer Menge von 2,5 bis 8 Gew.-% bezogen auf die Gesamtmenge an Hydrophobierungsmittel hinzugefügt sein.

In einer anderen Ausführungsform ist ein erfindungsgemäßes Hydrophobierungsmittel ein nicht ionisches Tensid, bei der Verwendung einer Mischung von Tensiden ist mindestens eins der Tenside ein ionisches Tensid.

In einer Ausführungsform ist dabei das nicht-ionische Tensid ausgewählt aus Octylphenolethoxylate, Nonylphenolethoxylate, Alkylpolyglycoside und/oder Alkylglycoside, insbesondere Polysorbat. Es zeigte sich insbesondere, dass Polysorbat bei Verwendung in Hydrophobierungsmitteln für Bindemittel auf Basis von pflanzlichen Proteinen die Eigenschaften der Hydrophobierungsmittel verbessert. Polysobate, wie die Tween-Produkte, sind besonders geeignet. Die Polysorbate können also entsprechende Polysorbate 20, 21, 40, 60, 61, 65, 80, 81, 120 sein.

So lange nicht anders ausgeführt, umfassen die vorliegend genannten einzelnen Komponenten des erfindungsgemäßen Hydrophobierungsmittels sowohl die Einzel- als auch einer Mehrzahl solcher Verbindungen, die unter den entsprechenden Gruppen fallen, wie 2, 3, 4 oder mehr Verbindungen.

Die Herstellung des Hydrophobierungsmittels erfolgt gemäß bekannter Verfahren, Dem Fachmann sind geeignete Verfahren bekannt.

In einer Ausführungsform ist das erfindungsgemäße Hydrophobierungsmittel für cellulosehaltige Materialien eines enthaltend:
a. Phenolische Biopolymere in einer Menge von 5 bis 50 Gew.-%;
b. Organische Säure in einer Menge von 1,5 bis 4,0 Gew.-%;
c. Alkalisilikate in einer Menge von 2,0 bis 6,0 Gew.-%;
d. Alkalihydroxid in einer Menge von 0,5 bis 5,0 Gew.-%;
e. Ggf. Metallsalz in einer Menge von 0,3 bis 3 Gew.-%;
f. Ggf. Organosilan in einer Menge von 1,0 bis 8,0 Gew. -%;
g. Ggf. Tensid in einer Menge von 2,5 bis 8,0 Gew. -%;
h. Wasser bis zu 100 Gew.-%.

In einem weiteren Aspekt betrifft die vorliegende Anmeldung Bindemittelzusammensetzungen für cellulosehaltige Materialien, wobei diese erfindungsgemäße Hydrophobierungsmittel aufweisen. In einer Ausführungsform kann dabei ein herkömmliches Bindemittel das erfindungsgemäße Hydrophobierungsmittel als Additiv enthalten, in einer anderen Ausführungsform kann das Bindemittel im Wesentlichen aus dem erfindungsgemäßen Hydrophobierungsmittel bestehen. Es zeigte sich, dass das erfindungsgemäße Bindemittel die Wasserresistenz und die Kochfestigkeit der Produkte verbessert. Insbesondere sind die erfindungsgemäßen Bindemittel geeignet, entsprechende Eigenschaften auch Bindemitteln auf Pflanzen-Protein-Basis zu verleihen.

In einer Ausführungsform ist das Bindemittel eines auf Basis von UF/MUF, PMUF, Protein Bindemittel oder Isocynat-basierende Bindemittel, insbesondere Proteinbindemittel auf Pflanzenbasis, wobei das erfindungsgemäße Hydrophobierungsmittel dem Bindemittel als Additiv hinzugefügt wird. Der Anteil kann hierbei in einem Bereich von 2-50 Gew.-%, bevorzugt 5-30 Gew.-%, besonders bevorzugt 7-15 Gew.-% bezogen auf die Gesamtmenge des Gesamtbindemittels liegen.

In einer Ausführungsform umfasst das erfindungsgemäße Bindemittel weiterhin übliche Komponenten, wenn notwendig. Diese schließen ein: Mindestens eines aus der Gruppe von Hydrowachs, Fungizide, Brandschutzmittel, Geruchsstoffen, Farbmittel, Füllstoffe und Mischungen hiervon.

Es zeigte sich, dass erfindungsgemäßen Hydrophobierungsmittel und Bindemittel in üblichen Produktionsprozessen eingesetzt werden kann. In Melamin enthaltenden Bindemitteln kann dieses teilweise ersetzt werden unter Beibehaltung der hydrophoben Eigenschaften. Bei UF Harzen zeigte sich keine Verringerung der Topfzeit nach Härterzugabe, die Lagerzeit im Vorratstank wird nicht beeinflusst.

Bei Isocyanat-Bindemitteln kann das erfindungsgemäße Hydrophobierungsmittel als Ersatz des Isocyanats genutzt werden. Bei OSB Platten können bis zu 30% Isocyanat gespart werden.

Schließlich können erstmals Hydrophobierungsmittel für Proteinbindemittel und entsprechende Bindemittel bereitgestellt werden, die ausreichend wasserresistent sind. Die Grundbasis verschiedener Proteinbindemittel ist pflanzliches Protein aus Soja, Raps, Erbse, Mais etc und Glycerin. Das Hydrophobierungsmittel harmoniert sehr gut mit diesen Grundsubstanzen, da er in einem pH-Bereich von 8-10 eingestellt wird und die Proteine nicht vorzeitig denaturieren können.

Schließlich werden Verbundwerkstoffprodukte bereitgestellt erhältlich durch Binden eines cellulosehaltigen Ausgangsmaterials mit einem erfindungsgemäßen Bindemittel und entsprechendes Formen des gewünschten Produkts.

Als cellulosehaltige Ausgangsmaterialen eignen sich besonders Holz oder einjährige Pflanzen, wie Holzfasern, Holzspäne, Holzstaub oder Holzmehl, Hackschnitzel, Strands, Furniere oder nach dem Scrimber-Verfahren aufbereitetes Material oder Recyclingmaterial.

In einer Ausführungsform sind die Verbundwerkstoffprodukte Platten oder Formpressteile einschließlich Spanplatten, MDF, HDF, OSB, Sperrholz, Lagenholz, oder Dämmplatten.

Schließlich werden Verfahren bereitgestellt indem die Herstellung der Verbundwerkstoffe mit Hilfe der erfindungsgemäßen Hydrophobierungsmittel und Bindemittel erfolgt. Bei den Verfahren handelt es sich um übliche Herstellungsverfahren für die entsprechenden Verbundwerkstoffprodukte.

Geeignete Hydrophobierungsmittel sind z.B.:
a) Für UF Harze als Bindemittel:
   phenolisches Makromolekül (Biopolymer),
   NaOH,
   wasserlösliche Alkalisilikate,
   Kupfer(II)-chlorid Dihydrat,
   einem Organosilan,
   Zitronensäure,
b) Für Isocyanat-basierte Bindemittel:
   einem phenolischen Makromolekül (Biopolymer),
   NaOH,
   wasserlösliche Alkalisilikate,
   Kupfer(II)-chlorid Dihydrat,
   einem Organosilan,
   Zitronensäure,
c) Für Bindemittel auf Basis von pflanzlichen Proteinen, hier nicht denaturierten pflanzlichen Proteinen, z.B. Raps, Soja, Erbse, Mais, Weizen, Ackerbohne, etc.,
   einem Zuckeralkohol auf pflanzlicher Basis, Propan-1,2,3-triol,
   einem Oxidationsmittel,
   einem Polysorbat
   einem phenolischen Makromolekül (Biopolymer),
   NaOH,
   wasserlösliche Alkalisilikate,
   Kupfer(II)-chlorid Dihydrat,
   einem Organosilan,
   Zitronensäure.

Diese erfüllten im vollen Umfang die gestellten Anforderungen.

In einer bevorzugten Ausführungsform von Protein-Bindemitteln liegen nicht denaturierte pflanzliche Proteine in Form von getrockneten Raps- oder Sojakuchen vor, die nach der "Kalt-Ölpressung" vornehmlich als Tierfutter, der Bio - Diesel oder der Bio-Gas Produktion weitere Verwendung finden. Der Proteingehalt liegt bei Raps um 32% und bei Soja um 55 %. Ebenso können Proteinkonzentrate mit 65% Proteingehalt oder Isolate > 90% Proteingehalt eingesetzt werden. Konzentrate und Isolate sind momentan aus wirtschaftlicher Sicht nicht bevorzugt, da das Bindemittel weniger wettbewerbsfähig ist.

Die Zugabe von Polysorbat faltet das Proteinmolekül auf und somit kann eine höhere Reaktion beim eigentlichen Denaturierungsprozess unter Hitze erfolgen. Die Bildung von Glycerinaldehyd aus Propan-1,2,3-triol (Glycerin) erfolgt mittels eines geeigneten milden Oxidationsmittel und ist vorzugsweise Wasserstoffperoxid. Als Katalysator fungiert hier der Pressvorgang bei der Holzwerkstoffproduktion mit einer Hitze > 100°C. Diese Verbindungen können sich über ein Endiol ineinander umlagern (Lobry-de-Bryn-van Ekenstein-Umlagerung). Dadurch ist es nicht nötig ein reines Aldehyd dem Bindemittel zuzuführen.

Die Anwesenheit eines phenolischen Makromolekül, also eines phenolischen Biopolymers, z.B. Kraft-Lignin mit einer Molmasse von 3000, bewirkt eine hohe hydrophobe Eigenschaft. Dem Fachmann ist bekannt, dass Kraft Lignin, nach dem Sulfonat-, oder auch Organosolvverfahren hergestellt, sich nicht in Wasser lösen lässt. Deshalb wird vorliegend ein Alkalihydroxid, wie NaOH, hinzugefügt. Der Einbau von diesem Lignin (Inkrustation von Lignin) führt zu einer "Verholzung" der Zellwand und somit zu verbesserten mechanischen Stabilitäten.

Überraschender Weise wurde herausgefunden, dass durch eine organische Säure Kraft-Lignin neutralisiert werden kann und dadurch das Bindemittel seine hohe Hydrophobie aufzeigt. Zusätzlich verbindet sich das Bindemittel mit dem in der Zellstruktur befindlichen Lignin, so das auch nach einem mehrstündigen Kochtest die geforderten technischen Werte erreicht werden.

Hierzu im Folgenden Überlegungen zum Leimen:
Um die "absolute trockene Holzmasse" ( atro ) zu erhalten, wird das cellulose- bzw. lignocellulosehaltige Material bei 103°C bis zur Gewichtskonstanz gedarrt. (siehe EN 322 und DIN 53183)

Um die Schwierigkeit, ein hydrophobes naturnahes Additiv herzustellen, müssen Aspekte der Klebetheorie und den Voraussetzungen des Holzwerkstoffes berücksichtigt werden.

Bei der Spanplattenherstellung (bis 750 kg/m³ Gewicht) werden Hackschnitzel, vornehmlich von Kiefer, Fichte/ Tanne und zunehmend einem geringen Anteil Laubhölzer, mittels Ringzerspaner und Hammermühlen zu diversen Fraktionen zerkleinert. Dieses Material weist eine Holzfeuchte im Fasersättigungsbereich von 25 - 35% bei Frischholz auf. Zunehmend kommt Recycling-Holz zum Einsatz, da Frischholz durch Schädlingsbefall stark im Einschlag reduziert wurde. 2021 betrug der Recyclingholzanteil bei Spanplatte schon 50 % (17 Mio m3) mit steigender Tendenz. (European Panel Federation) Recycling-Holz besteht aus einem Gemisch von Nadelholz, Laubholz, Spanplatten mit UF/MUF Harz gebunden, OSB mit Isocyanaten gebunden, MDF/HDF mit UF/MUF gebunden. Es darf max. Klasse A2 Holz zum Einsatz kommen. Klasse A2: Verleimtes, beschichtetes, lackiertes Altholz ohne halogenorganische Verbindungen in der Beschichtung, ohne PVC-Anteil. Dieses Material weist eine Feuchte zwischen 8 und 16 % auf.

Der Unterschied im Fasersättigungsbereich der Hölzer wird vom Gehalt an Holzinhaltsstoffen und von einem erhöhten Ligningehalt in den Zellwänden bewirkt. Wird der Fasersättigungsbereich unterschritten, so wird das Quellwasser den Zellwänden entzogen. Die Zellwand trocknet und schwindet. Wird die Trocknung unter 5 % getrieben, so verläuft sie stets mit chemischen Veränderungen (Verhornungserscheinungen) der Holzoberfläche der Spanfraktion. Es wird kontinuierlich gebundenes Wasser entfernt. Unterhalb des Fasersättigungsbereiches ist das Holz hygroskopisch. Es nimmt bei erhöhter Umgebungsfeuchte wieder Wasser auf und quillt. In der Industrie wird die Spanfraktion auf 0,8 - 2,4 % herunter getrocknet.

Bei der Spanplattenproduktion trifft das wässrige Bio-Bindemittel mit einem Feststoffgehalt von 50 - 65% in einem Blender auf die getrockneten Späne. Die Späne reagieren hygroskopisch und die Holzfeuchte nach Beleimung liegt bei ca. 9 % (Leimauftragsmenge: Deckschicht 9%, Mittelschicht 7 %)

Verantwortlich für die starke Hygroskopie ist die Hemicellulose, welche bei Nadelhölzern vornehmlich Hexosane, also Monosaccharide enthält. Desweiteren weisen verschiedene Bäume eine unterschiedliche Anzahl von Holzinhaltsstoffen auf, die teilweise stark hygroskopisch sind. Hierunter fallen Kiefer, Fichte/Tanne, Lärche, Linde, Espe, Birke die Stoffe Alkoloide, Terpene, Zucker, Salze, Säuren aber auch hydrophobe Stoffe wie Harze, Fette, Öle, Wachse.

Des Weiteren ist zu beachten, dass ca. 10 % des zerspanten Holzes Splintholz ist, also mit Bast und Kambium und dem frischen Frühholz. Dieses Holz ist grobporiger als das Kernholz und somit auch durch die größere Oberfläche anfälliger nach dem Trocknen gegen Quellung. Durch den Splint mit seinen umfangreichen Kapillarstrukturen zieht der Baum Wasser aus dem Erdreich und verteilt es bis in die Krone. Splintholz ist nach dem Trocknen wesentlich leichter und hat bei Kiefer ein Gewicht von ca. 280 kg/m3, dagegen Kernholz ca. 500 kg/m3.

Bei "Mittel-dichten-Faserplatten" (MDF bis 780 kg/m3 Gewicht) wird das Holz ebenso, wie bei Spanplatten, zu Hackschnitzeln aufbereitet. Die Hackschnitzel werden nach dem "Asplundverfahren" bei ca.180°C heißem Wasserdampf unter Druck von 8 - 12 bar aufgeschlossen. Nach dieser "Plastifizierung" wird das Material in den eigentlichen Refiner befördert, dort zerfasert und schließlich weitertransportiert. Insgesamt spricht man von einer Refineranlage. Die Refineranlage umfasst unter anderem die Komponenten Vordampf-Bunker, Stopfschnecke, Kocher, Refiner und Auslassventil.

Durch den Kochvorgang werden Lignine und auch Hemicellulose an den Außenwänden der Hackschnitzel ausgelöst und die gesättigten Hackschnitzel dem Zerfaserungsprozess im Refiner zugeführt. Mittels Mahlscheiben erfolgt der Zerfaserungsprozess unter Druck. Bei dem Prozess entsteht Ablauge, die fachgerecht entsorgt werden muss. Die Holzfeuchte bei dem Prozess beträgt über 100% bezogen auf atro Holz. (Zum Beispiel weisen frisch eingeschlagene Stämme in Abhängigkeit der Baumart eine Feuchte von 120 - 180 % auf). Unmittelbar nach dem Auslassventil des Refiners durchströmen mit einer hohen Geschwindigkeit die nassen Fasern eine "Blow Line" und werden mittels Düsen mit Bindemittel beleimt. Erst danach werden die nassen, beleimten Fasern einem Trockner zugeführt und auf ca. 9-11% Feuchte herunter getrocknet.

Die gesättigte Hemicellulose wird bei den Grenzschichten der nassen Fasern mit Bindemittel beaufschlagt und durch die Hygroskopizität der Monosaccharide dringt das Bindemittel in die Faserstruktur ein.

### Funktionalität des erfindungsgemäßen Hydrophobierungsmittels bei naturnahen Bindemitteln

Eine wertvolle Eigenschaft von Proteinen ist die Möglichkeit Formaldehyd zu binden. Formaldehyd hat eine nicht rotierende Aminogruppe an der Peptidkette mit der das Protein reagieren kann. Dies ist wichtig, da jedes Holz bei höheren Temperaturen Formaldehyd abgibt, das vom Leimprotein aufgenommen werden kann (Fängerfunktion). Hierfür werden bevorzugt nicht denaturierte Proteine benötigt, die ebenso für eine hohe Reaktivität verantwortlich sind und kurze Presszeiten ermöglichen. Die pflanzlichen Proteine denaturieren in Sekunden nach Erreichen der 100°C Marke beim Pressvorgang und durch den Quervernetzer wird eine Gitterstruktur gebildet. Als Quervernetzer fungiert Glycerinaldehyd, welche sich bei Temperaturen über 95-100°C In-Situ aus Glycerin abspaltet.

Darüber hinaus bewirkt das im Klebstoff enthaltene Wasser-Glycerin-Gemisch, die teilweise Trennung von Lignin und Cellulose im Holz. Obwohl sehr effiziente Extraktion von Lignin aus den Holzfasern mit einer hohen Temperatur, eine erhebliche Zeitspanne erfordert und sogar die Verwendung eines Katalysators erforderlich macht, tritt die teilweise Entfernung von Lignin während der gesamten Bearbeitungszeit bei MDF mit hoher Temperatur auf, d. h. Kochen, Zerfaserung im Refiner, während der Beleimung der Holzfasern per blow-line, Trocknen und anschließenden Formen und Pressen zu Faserplatten.

Die eintretende Verdichtung durch Erhöhung der Festphase im Klebstoff durch den Pressvorgang unter Hitze bewirkt eine Dispersion des Gemisches bis zur Aushärtung. Die dabei auftretende Delignifizierung führt zu einer Erhöhung des Feststoffgehalts im Klebstoff und offenbart die Bündel kristalliner Cellulosefasern aus Holz, die aufgrund von Wasserstoffbrückenbindungen anfällig für Wechselwirkungen mit Leimbestandteilen in der Grenzschicht sind. Delignifizierung geht in der Regel mit einer Veränderung der natürlichen Struktur von Ligninen einher. Es kommt dann zu einer Umlagerungsreaktion, bei der C-O- und C-C-Bindungen gespalten und neue C-C-Bindungen gebildet werden. Eine solche Umlagerungsreaktion tritt auch bei der Herstellung von Holzwerkstoffen mit Zugabe des erfindungsgemäßen Hydrophobierungsmittels, im Folgenden auch als Additiv LCC bezeichnet, auf.

Bei Protein-Bindemittel können folgenden Wechselwirkungen auftreten: Wasserstoffbrückenbindungen, Dipol-Permanent-permanenten Dipol und van der Waals-Dispersion (induzierte Dipol-induzierte Dipol). Wasserstoffbrücken scheinen unter diesen Wechselwirkungen die größte Rolle zu spielen. Alle Basiskomponenten des Bindemittels und das erfindungsgemäße Additiv LCC können unter Wettbewerbsbedingungen mit Wasserstoffbrücken interagieren.

Die Proteinaggregation oder Verschränkung von Proteinkettenfragmenten spielt eine Rolle. Die Aggregation oder Verstrickung von Proteinketten (oder Fragmenten davon) kann während des Hochtemperaturpressens unter erhöhtem Druck der Platte auftreten (große Schwingungen der freien Kettenfragmente sind möglich).

Die Zugabe von Polysorbat erweist sich bei Protein-basierten Bindemitteln als vorteilhaft, da somit ein Auffalten der Proteine erreicht wird. Die Oberflächen der Proteine werden vergrößert und reaktiver.

Intermolekulare Wechselwirkungen spielen eine wichtige Rolle bei der Herstellung des Klebstoffs, seiner Langlebigkeit und beim Beleimen von Spänen und von Fasern. Sie beeinflussen auch die Eigenschaften der Holzwerkstoffplatte. Diese dürfen durch Additive keine Einschränkungen erfahren. Die Festigkeit einer kochfesten Holz-Leim-Verbindung wird durch das Überführen des Leimes aus dem flüssigen in den festen Zustand erzielt, wobei die Gelierung des Leimes mit den Extraktstoffen oder Holzinhaltsstoffen der Hemicellulose eine Symbiose eingehen; starke Kohäsionskräfte und starke adhäsive Kräfte zwischen Leim und Holz werden erreicht. Verstärkt wird dieser Prozess durch oligomere Phenole (Biopolymere) des Kraft Lignins, welche an das natürliche Lignin des Holzes andocken.

Zeitgemäße Bindemittel der Holzwerkstoffindustrie sollten zu einem hohen Maße aus nachhaltigen, nicht toxischen Materialien bestehen. Pflanzliche Proteinbindemittel mit integriertem Hydrophobierungsmittel erfüllen in einem hohen Maß folgende Anforderungen:
**1. -Nachhaltigkeit**
Definition: Nachhaltigkeit bezeichnet einen die jeweilige Regenerationsfähigkeit berücksichtigenden Umfang mit erneuerbaren bzw. nachwachsenden Ressourcen (Waldbestände, Energiepflanzen). Ziel ist langfristiges Denken insb. langfristiges wirtschaftliches Handeln, das heute die Natur so nutzt, dass die Lebensgrundlagen zukünftiger Generationen dauerhaft erhalten bleiben (Generationenverantwortung).
Quelle: Schubert: das Politlexikon 7 aktual. 2020, Das vorliegende Hydrophobierungsmittel weist einen hohen Nachhaltigkeitswert auf.
**2.** - **"Cradle to grave", Carbon Foot Print ( LCA =life cycle analysis )**
Definition: Carbon Foot Print (LCA) ist ein Maß für den Gesamtbetrag von Kohlenstoffdioxyd-Emissionen, die direkt und indirekt durch Aktivitäten verursacht werden oder während der Lebensstadien eines Produkts entstehen. Hier sind auch Transporte inbegriffen und auch die Entwertung eines Produktes. Die Maßeinheit ist pro kg Produkt entstandenen kg CO2. Der Wert für ein erfindungsgemäßes Bindemittel liegt dabei beispielhaft bei einem Wert von 1,287 kg CO2 eq/ kg Bindemittel.
**3. -Formaldehydfrei---NAF-Produkt**
Durch das Hydrophobierungsmittel (H2O - Blocker) LCC wird kein zusätzliches Formaldehyd in den Bindemittelansatz eingebracht. LCC ist ein NAF Produkt (non-added-formaldehyd).
**4.- Wasserresistenz nach EN 322**
Holzwerkstoffproduzenten begnügen sich nicht mit Erreichen des 24 Stunden Wasserlagerungstest und die daraus resultierenden Quellwerte. Es wird ein Kochtest über 2 Stunden bzw. 6 Stunden durchgeführt mit anschließendem Querzug. Querzugfestigkeit nach Kochtest EN1087-1. Die anzustrebenden Werte wurden erreicht. (Siehe Tabelle unten)
**5.- Hohe Lagerstabilität und Verarbeitung mittels Standard-Equipment**
bei gleicher Produktionsgeschwindigkeit wie bei herkömmlichen Bindemitteln.
**6.- Einhaltung der vorgeschriebenen VOC Werte bei Span- und Faserplatten**
(mit Frischholz getestet) nach DIN ISO 16000-6, DIN EN ISO 16000-9,:2008-04 und DIN EN ISO 16000-11:2006-06; Kammertest DIN EN 16516; VOC nach DIN 16516, GC/MS Formaldehyd / Aldehyd / Aceton nach DIN EN 16516, HPLC; Evaluierung nach AgBB 2018 NIK-Werte (niedrigst interessierende Konzentration)
Zusammenfassung der Messungen über alle Emissionen bei Spanplatte 16 mm Dicke Einschicht-Spanplatte mit 10% Leimmenge auf atro Holz, 62% Feststoffgehalt Referenz: Urea-Formaldehyd-Harz von BASF Kaurit Leim 333.

**Tabelle 1**

| Alle Angaben in ppm | UF | MDF +Bio-Bindemittel,+20% Protein, +30% Glycerin | MDF +Bio-Bindemittel,+20% Protein, +30% Glycerin + 15% LCC | LCC 160 g/m2 |
|---|---|---|---|---|
| Summe VVOC (<C6) | 250 | 109 | 422 | 10 |
| Summe VOC (C6-C16) | 780 | 95 | 119 | 56 |
| Summe SVOC (C16-C22) | <5 | <1 | <1 | <1 |
| TVOC (C6-C16) | 780 | 95 | 119 | 56 |
| | | | | |
| Formaldehyd Grenzwert 0,06 ppm | 0,051 | 0,017 | 0,011 | 0,000 |

**7.- Keine Geruchsbelästigung** bei der Produktion und auch bei dem fertigen Holzwerkstoffprodukt.
**8.- Sämtliche Beschichtungen problemlos durchführbar,** also Papierbeschichtung, Lackierung, Pulverbeschichtung, HPL und CPL Beschichtung, Furnieren, Metallbeschichtung.
**9.- Endprodukt ist gut recyclebar und kompostierbar** durch naturnahe Inhaltsstoffe.

Binde- bzw. Bindemittelsysteme für Holzwerkstoffe auf natürlicher oder naturnaher Basis gewährleisten nicht für jedes Anwendungsgebiet eine normgerechte Wirkung; insbesondere bei dem Anspruch auf Wasserresistenz. (Quellwerte nach EN 322 und Querzugfestigkeit nach Kochtest EN 1087-1).

Die vorliegende Erfindung wird anhand von Beispielen weiter erläutert ohne darauf beschränkt zu sein.

### Beispiele:

Bindemittel-Inhaltsstoffe bei den folgenden Anwendungsbeispielen in Gew-%

| **Anwendungsbeispiel** | | **1** | **2** | **3** | **4** | **5** | **6** |
|---|---|---|---|---|---|---|---|
| **Pos.** | **Inhaltsstoff** | **MDF** | **Span** | **OSB** | **Span** | **OSB** | **HDF** |
| 1 | UF (Silekol No S-120) | | | | 78,5 | | |
| 2 | Härter (Ammoniumsulfat) | | | | 1,5 | | |
| 3 | PMDI | | | | | 70 | |
| 4 | Sojamehl | 20 | 15 | 19 | | | 18 |
| 5 | Glycerin 80%ig | 30 | 30 | 30 | | | 30 |
| 6 | Peroxyd 30%ig | | 4 | 2 | | | |
| 7 | NaOH | 1 | 1 | 1 | 1 | 2 | 2 |
| 8 | Lignin 40 %ig | 9 | 14 | 14 | 12 | 19 | 19 |

| | | | | | | | |
|---|---|---|---|---|---|---|---|
| 9 | Polysorbat | 0,5 | 1 | 1 | 0 | 0 | 1 |
| 10 | Zitronensäure | 2,5 | 3 | 2,5 | 3 | 4 | 4 |
| 11 | Kupfersulfat | 2 | 1 | 1,5 | 2 | 3 | 3 |
| 12 | Natriumwasserglas | 2 | 2 | 2 | 2 | 2 | 2 |
| 13 | Dynasilan | 3 | 1 | 4 | 0 | 0 | 3 |
| 14 | H₂O | 30 | 18 | 23 | 0 | 0 | 21 |
| | | 100 | 100 | 100 | 100 | 100 | 100 |

Im Folgenden werden die Bestandteile des erfindungsgemäßen Hydrophobierungsmittels als LCC (Komponenten 7 bis 13) zusammengefasst.

### ANWENDUNGSBEISPIEL 1

### MDF (Bio-Bindemittel + LCC)

Auf einer ContiRoll Anlage der Firma Siempelkamp (Krefeld) wurden 16 mm MDF Platten mit einem Bio-Bindemittel nach dieser Erfindung hergestellt. Länge der Presse = 28 Meter.

Das Gewicht der Platte betrug 720 kg/m3. Der Leimauftrag erfolgte mittels Blow line. Die Fasern wurden aus frischem Kiefernholz hergestellt. Die Leimauftragsmenge betrug 9 % auf atro Holz.

Die Faserfeuchte nach Trocknung der beleimten Fasern betrug 11%.

Das eingesetzte einkomponentige Bindemittelgemisch hatte einen Feststoffgehalt von 55%, davon 15% Additiv LCC. (64,8 kg Feststoff, 117,8 kg Nassleim).

LCC incl Polysorbat mit 59,3% Feststoffgehalt. (17,6 kg Nass Additv LCC).

Zum Feststoffgehalt des Bindemittels zählen alle organischen und anorganischen Bestandteile des Bindemittels, einschließlich Glycerin.
Pressfaktor = 5,5 sec/ mm
Presstemperatur = 220 °C
**EN 320 Biegefestigkeit**

| Pos | Länge mm | Breite mm | Dicke mm | Gewicht g | spez. Gewicht kg/m³ | Kraft N | Dauer s | Biegefestigkeit N/mm² | Elastizitätsmodul N/mm² |
|---|---|---|---|---|---|---|---|---|---|
| Norm EN 312 | | | | | | | | 24 | 2200 |
| 1 | 370 | 51 | 16,53 | 219,77 | 728 | 455 | 45,1 | 26,5 | 2612,12 |
| 2 | 370 | 50,6 | 16,28 | 220,67 | 731 | 406 | 43,5 | 28,4 | 2379,55 |
| 3 | 370 | 51,4 | 16,66 | 216,15 | 716 | 419 | 40,9 | 24,7 | 2511,34 |
| 4 | 370 | 51,1 | 16,59 | 220,98 | 732 | 443 | 49,2 | 29,3 | 2728,11 |
| ***Durchschnitt*** | | ***51,02*** | ***16,49*** | ***219,39*** | ***727*** | ***430*** | ***44,7*** | ***27,22*** | ***2557,76*** |

**EN 317 Wasser Absorption und Dicken-Quellung ( Bio-Bindemittel + LCC )**

| Pos | Länge mm | Breite mm | Dicke mm | Gewicht g | spez. Gewicht kg/m³ | Dicke | | Gewicht | | Quellung | | Absorption | |
|---|---|---|---|---|---|---|---|---|---|---|---|---|---|
| | | | | | | 2h mm | 24h mm | 2h g | 24h g | 2h % | 24h % | 2h % | 24h % |
| Norm MDF H | | | | | | | | | | | 8 | | |
| 1 | 51,1 | 51,2 | 16,53 | 28,08 | 728 | 17,58 | 17,76 | 53,29 | 57,44 | 6,39 | 7,47 | 83,25 | 97,52 |
| 2 | 51,1 | 51,1 | 16,28 | 29,48 | 731 | 17,25 | 17,53 | 53,19 | 57,04 | 5,99 | 7,72 | 81,04 | 94,15 |
| 3 | 51,2 | 51,1 | 16,66 | 28,74 | 716 | 17,90 | 18,04 | 53,39 | 56,27 | 7,45 | 8,34 | 85,78 | 98,55 |
| 4 | 51 | 51,2 | 16,59 | 28,07 | 732 | 17,55 | 17,88 | 52,63 | 56,83 | 5,83 | 7,78 | 84,86 | 99,61 |
| 5 | 50,8 | 50,8 | 16,62 | 28,49 | 726 | 19,05 | 50,75 | 50,75 | 56,09 | 6,17 | 8,12 | 80,67 | 99,68 |
| ***Durchschnitt 51*** | | ***51,1*** | ***16,5*** | ***28,67*** | ***727*** | ***17,58*** | ***18,05*** | ***52,5*** | ***56,73*** | ***3,18*** | ***7,88*** | ***83,12*** | ***99,68*** |

**EN 317 Wasser Absorption und Dicken-Quellung ( Bio-Bindemittel ohne LCC )**

| | | | | | | | | | | | | |
|---|---|---|---|---|---|---|---|---|---|---|---|---|
| ***Durchschnitt 51*** | ***50,6*** | ***16,4*** | ***28,41*** | ***732*** | ***28,44*** | ***31,70*** | ***64,5*** | ***72,34*** | ***73,4*** | ***93,3*** | ***127*** | ***154,62*** |

**EN 319 Zugfestigkeit**

| Pos | Länge mm | Breite mm | Dicke mm | Gewicht g | spez. Gewicht kg/m³ | Kraft N | Dauer s | Zugfestigkeit N/mm² |
|---|---|---|---|---|---|---|---|---|
| Norm MDF.H | | | | | | | | 0,75 |
| 1 | 51 | 51,3 | 16,59 | 29,08 | 728 | 1870 | 9,1 | 0,79 |
| 2 | 51,2 | 51,1 | 16,52 | 29,38 | 731 | 1841 | 12,5 | 0,83 |
| 3 | 51 | 51,3 | 16,38 | 28,34 | 716 | 1789 | 10,3 | 0,73 |
| 4 | 51,4 | 51 | 16,48 | 28,47 | 732 | 1852 | 14,1 | 0,97 |
| 5 | 51 | 50,3 | 16,51 | 28,09 | 726 | 1849 | 13,6 | 0,82 |
| ***Durchschnitt*** | ***51,1*** | ***51,2*** | ***16,47*** | ***28,67*** | ***727*** | ***1840*** | ***11,9*** | ***0,83*** |

### ANWENDUNGSBEISPIEL 2

### Spanplatte (Bio-Bindemittel + LCC)

Auf einer ContiRoll Anlage der Firma Siempelkamp (Krefeld) wurden 16 mm 3-Schicht Spanplatten mit einem Bio-Bindemittel plus Additiv LCC nach dieser Erfindung hergestellt. Länge der Presse = 28 Meter. Das Gewicht der Platte betrug 640 kg/m3. Der Leimauftrag erfolgte mittels Blender für Deckschichten und für Mittelschicht.

Die Fasern wurden aus 80% Recycling Holz und zu 20 % aus frischem Kiefernholz hergestellt. Das frische Kiefernholz wurde ausschließlich in die Deckschicht gefahren.

Die Leimauftragsmenge betrug 9 % auf atro Holz für Deckschichten und 7% für die Mittelschicht.

Die Deckschichten 2 x 17,5 %; Mittelschicht 65 %.

Die Spanfeuchte nach Trocknung vor Beleimung betrug 4,0 %. Die Faserfeuchte nach Beleimung betrug 9%.

Das eingesetzte ein komponentige Bindemittelgemisch hatte einen Feststoffgehalt von 60%, davon 20% Additiv LCC.

Pro m³ Spanplatte werden folgende Leimmengen eingesetzt:
Deckschichten: 9 %, absolut bei 35% Anteil = 20,16 kg Feststoff und 33,6 kg Nassleim Mittelschicht: 7 % absolut bei 65% Anteil = 29,12 kg Feststoff und 48,5 kg Nassleim Summe Bindemittel = 82,1 kg Nassleim
LCC incl Polysorbat mit 59,3% Feststoffgehalt (16,42 kg Nass Additv LCC )
Zum Feststoffgehalt des Bindemittels zählen alle organischen und anorganischen Bestandteile des Leimes, einschließlich Glycerin.
Pressfaktor = 6,0 sec/ mm
Presstemperatur = 230 °C
**EN 320 Biegefestigkeit**

| Pos | Länge mm | Breite mm | Dicke mm | Gewicht g | spez. Gewicht kg/m³ | Kraft N | Dauer s | Biegefestigkeit N/mm² | Elastizitätsmodul N/mm² |
|---|---|---|---|---|---|---|---|---|---|
| Norm P3 | | | | | | | | 14 | 1950 |
| 1 | 370 | 51 | 16,59 | 202,91 | 645 | 416 | 45,1 | 15,14 | 2702,38 |
| 2 | 370 | 50,8 | 16,38 | 197,72 | 642 | 361 | 43,5 | 16,7 | 2499,43 |
| 3 | 370 | 51 | 16,48 | 200,79 | 646 | 386 | 40,9 | 16,39 | 2510,35 |
| 4 | 370 | 51,2 | 16,51 | 204,77 | 655 | 441 | 49,2 | 17,6 | 2628,86 |
| ***Durchschnitt*** | | ***51,1*** | ***16,49*** | ***201,55*** | ***647*** | ***401*** | ***44,7*** | ***16,45*** | ***2585,25*** |

**EN 317 Wasser Absorption und Dicken-Quellung**

| Pos | Länge mm | Breite mm | Dicke mm | Gewicht g | spez. Gewicht kg/m³ | Dicke | | Gewicht | | Quellung | | Absorption | |
|---|---|---|---|---|---|---|---|---|---|---|---|---|---|
| | | | | | | 2h mm | 24h mm | 2h g | 24h g | 2h % | 24h % | 2h % | 24h % |
| Norm | | | | | | | | | | | 14 | | |
| 1 | 51,1 | 51,2 | 16,56 | 28,08 | 641 | 17,05 | 18,05 | 47,47 | 51,62 | 3,46 | 9,03 | 63,25 | 77,52 |
| 2 | 51,1 | 51,1 | 16,38 | 29,98 | 642 | 16,95 | 17,99 | 46,67 | 50,84 | 3,59 | 9,88 | 61,04 | 75,44 |
| 3 | 51,2 | 51,1 | 16,48 | 28,34 | 646 | 17,16 | 18,02 | 45,69 | 49,75 | 4,12 | 9,36 | 61,22 | 75,55 |
| 4 | 51 | 51,2 | 16,51 | 28,47 | 655 | 17,15 | 18,12 | 45,43 | 48,28 | 3,89 | 9,78 | 59,58 | 69,61 |
| 5 | 50,8 | 50,8 | 16,52 | 28,09 | 659 | 17,12 | 18,02 | 44,57 | 47,66 | 3,65 | 9,12 | 58,67 | 69,68 |
| ***Durchschnitt 51*** | | ***51,1*** | ***16,53*** | ***28,67*** | ***648*** | ***17,07*** | ***18,04*** | ***45,96*** | ***49,63*** | ***3,74*** | ***9,43*** | ***60,75*** | ***73,56*** |

**EN 317 Wasser Absorption und Dicken-Quellung ( Bio-Bindemittel ohne LCC )**

| | | | | | | | | | | | | |
|---|---|---|---|---|---|---|---|---|---|---|---|---|
| ***Durchschnitt 51*** | ***50,9*** | ***16,87*** | ***29,21*** | ***656*** | ***46,05*** | ***52,3*** | ***82,5*** | ***114,73*** | ***173*** | ***210*** | ***283*** | ***392*** |

**EN 319 Zugfestigkeit**

| Pos | Länge mm | Breite mm | Dicke mm | Gewicht g | spez. Gewicht kg/m³ | Kraft N | Dauer s | Zugfestigkeit N/mm² |
|---|---|---|---|---|---|---|---|---|
| Norm P3 | | | | | | | | 0,45 |
| 1 | 51 | 51,3 | 16,56 | 29,09 | 662 | 1770 | 8,8 | 0,68 |
| 2 | 51,2 | 51,1 | 16,38 | 29,98 | 670 | 1777 | 27,1 | 0,68 |
| 3 | 51 | 51,2 | 16,48 | 28,34 | 646 | 1604 | 8,4 | 0,61 |
| 4 | 51,4 | 51 | 16,51 | 28,47 | 665 | 1734 | 19,1 | 0,66 |
| 5 | 51 | 50,3 | 16,52 | 27,71 | 666 | 1879 | 14,6 | 0,72 |
| ***Durchschnitt*** | ***51,1*** | ***51,2*** | ***16,47*** | ***28,52*** | ***662*** | ***1753*** | ***15,6*** | ***0,67*** |

### ANWENDUNGSBEISPIEL 3

### OSB (BioBindemittel + LCC)

Auf einer Laborpresse wurden 18 mm 1-Schicht OSB Platten mit einem Bio-Bindemittel plus Additiv LCC nach dieser Erfindung hergestellt. Das Gewicht der Platte betrug 640 kg/m3.

Der Leimauftrag erfolgte mittels Blender. Die Flakes wurden aus frischem Kiefernholz hergestellt und dem Labor zur Verfügung gestellt. Leimauftragsmenge betrug 10 % auf atro Holz.
Die Holzfeuchte nach Trocknung vor Beleimung betrug 3,5 %. Die Feuchte der Flakes nach Beleimung betrug 10 %.
Das eingesetzte ein komponentige Bindemittelgemisch hatte einen Feststoffgehalt von 60 %, davon 20 % Additiv LCC.
Leimmenge: 10 %, 64 kg Feststoff und 106,6 kg Nassleim
LCC incl Polysorbat mit 59,3 % Feststoffgehalt. ( 21,32 kg Nass Additv LCC )
Zum Feststoffgehalt des Bindemittels zählen alle organischen und anorganischen Bestandteile des Leimes, einschließlich Glycerin.
Pressfaktor = 8,0 sec/ mm
Presstemperatur = 230 °C
**EN 320 Biegefestigkeit**

| Pos | Länge mm | Breite mm | Dicke mm | Gewicht g | spez. Gewicht kg/m³ | Kraft N | Dauer s | Biegefestigkeit N/mm² | Elastizitätsmodul N/mm² |
|---|---|---|---|---|---|---|---|---|---|
| Norm OSB 3 | | | | | | | | 20 | 3500 |
| 1 | 370 | 51,1 | 18,26 | 223,2 | 645 | 476 | 42,1 | 24,1 | 3708,44 |
| 2 | 370 | 50,8 | 18,12 | 217,49 | 667 | 401 | 39,5 | 26,89 | 3911,24 |
| 3 | 370 | 51 | 18,42 | 220,86 | 632 | 398 | 42,9 | 20,49 | 3510,15 |
| 4 | 370 | 51,2 | 18,31 | 225,24 | 659 | 452 | 46,7 | 25,5 | 3622,36 |
| ***Durchschnitt*** | | ***51,02*** | ***18,27*** | ***221,69*** | ***651*** | ***416*** | ***42,8*** | ***24,24*** | ***3688,04*** |

**EN 317 Wasser Absorption und Dicken-Quellung**

| Pos | Länge mm | Breite mm | Dicke mm | Gewicht g | spez. Gewicht kg/m³ | Dicke | | Gewicht | | Quellung | | Absorption | |
|---|---|---|---|---|---|---|---|---|---|---|---|---|---|
| | | | | | | 2h mm | 24h mm | 2h g | 24h g | 2h % | 24h % | 2h % | 24h % |
| Norm | | | | | | | | | | | 14 | | |
| 1 | 51,1 | 51,2 | 18,26 | 29,08 | 671 | 22,42 | 22,6 | 53,29 | 57,44 | 35,39 | 36,47 | 83,25 | 97,52 |
| 2 | 51,1 | 51,1 | 18,12 | 29,38 | 679 | 21,93 | 22,17 | 53,19 | 57,04 | 32,27 | 33,72 | 81,04 | 94,15 |
| 3 | 51,2 | 51,1 | 18,42 | 28,34 | 655 | 21,61 | 21,94 | 52,65 | 56,27 | 30,65 | 32,65 | 85,78 | 98,55 |
| 4 | 51 | 51,2 | 18,31 | 28,47 | 662 | 21,65 | 22,02 | 52,63 | 56,83 | 31,53 | 33,78 | 84,86 | 99,61 |
| 5 | 50,8 | 50,8 | 18,64 | 28,09 | 659 | 20,81 | 21,33 | 50,75 | 56,09 | 25,97 | 29,12 | 80,67 | 99,68 |
| ***Durchschnitt 51*** | | ***51,1*** | ***18,34*** | ***28,67*** | ***665*** | ***21,68*** | ***22,01*** | ***52,5*** | ***56,73*** | ***31,16*** | ***33,15*** | ***83,12*** | ***99,68*** |

**EN 317 Wasser Absorption und Dicken-Quellung ( BioBindemittel ohne LCC )**

| | | | | | | | | | | | | |
|---|---|---|---|---|---|---|---|---|---|---|---|---|
| ***Durchschnitt 50,6*** | ***51,3*** | ***18,42*** | ***29,04*** | ***653*** | ***30,94*** | ***39,05*** | ***66,7*** | ***79,3*** | ***168*** | ***212*** | ***129*** | ***173*** |

**EN 319 Zugfestigkeit**

| Pos | Länge mm | Breite mm | Dicke mm | Gewicht g | spez. Gewicht kg/m³ | Kraft N | Dauer s | Zugfestigkeit N/mm² |
|---|---|---|---|---|---|---|---|---|
| Norm | | | | | | | | 0,32 |
| 1 | 50 | 51,1 | 18,26 | 29,08 | 671 | 2105 | 21,3 | 0,58 |
| 2 | 51,3 | 50,1 | 18,12 | 29,38 | 679 | 2167 | 22,1 | 0,63 |
| 3 | 51 | 51,2 | 18,42 | 28,34 | 655 | 1964 | 18,4 | 0,51 |
| 4 | 50,4 | 51 | 18,31 | 28,47 | 662 | 2016 | 19,4 | 0,61 |
| 5 | 51,3 | 50,7 | 18,64 | 28,09 | 659 | 2007 | 18,6 | 0,69 |
| ***Durchschnitt*** | ***50,8*** | ***50,8*** | ***18,34*** | ***28,67*** | ***665*** | ***2051*** | ***19,96*** | ***0,60*** |

### ANWENDUNGSBEISPIEL 4

### Spanplatte mit UF+LCC

Auf einer Laborpresse wurden 12 mm 1-Schicht Spanplatten mit einem UF Harz plus Additiv LCC nach dieser Erfindung hergestellt. Das Gewicht der Platte betrug 720 kg/m3.

Der Leimauftrag erfolgte mittels Blender. Die Späne wurden aus frischem Kiefernholz hergestellt und dem Labor zur Verfügung gestellt. Die Leimauftragsmenge betrug 8 % auf atro Holz. Die Holzfeuchte nach Trocknung vor Beleimung betrug 2,2 %. Die Feuchte der Späne nach Beleimung betrug 8,5 %.

UF Bindemittel der Firma Silekol No: S-137.

Das eingesetzte UF + LCC Bindemittelgemisch hatte einen Feststoffgehalt von 62 %, davon 20 % Additiv LCC. Dem System wurde ein Härter (Ammoniumsulfat) von 1,5 % zugegeben. Leimmenge: 8 %, 57,6 kg Feststoff und 92,9 kg Nassleim.

LCC mit 59,3 % Feststoffgehalt. ( 18,58 kg Nass Additv LCC ).
Pressfaktor = 8,0 sec/ mm
Presstemperatur = 200 °C
**EN 320 Biegefestigkeit**

| Pos | Länge mm | Breite mm | Dicke mm | Gewicht g | spez. Gewicht kg/m³ | Kraft N | Dauer s | Biegefestigkeit N/mm² | Elastizitätsmodul N/mm² |
|---|---|---|---|---|---|---|---|---|---|
| Norm | | | | | | | | 15 | 2050 |
| 1 | 370 | 51,3 | 12,2 | 165,97 | 788 | 287 | 34,3 | 18,47 | 2605,11 |
| 2 | 370 | 50,2 | 12,7 | 172,91 | 740 | 276 | 32,5 | 16,8 | 2519,48 |
| 3 | 370 | 50,5 | 12,1 | 164,69 | 750 | 237 | 39,1 | 15,29 | 2214,85 |
| 4 | 370 | 50,2 | 12,4 | 168,56 | 761 | 249 | 31,2 | 16,6 | 2320,73 |
| ***Durchschnitt*** | | ***50,5*** | ***12,35*** | ***168,03*** | ***760*** | ***262*** | ***34,27*** | ***16,79*** | ***2415,05*** |

**EN 317 Wasser Absorption und Dicken-Quellung**

| Pos | Länge mm | Breite mm | Dicke mm | Gewicht g | spez. Gewicht kg/m³ | Dicke | | Gewicht | | Quellung | | Absorption | |
|---|---|---|---|---|---|---|---|---|---|---|---|---|---|
| | | | | | | 2h mm | 24h mm | 2h g | 24h g | 2h % | 24h % | 2h % | 24h % |
| 1 | 51,1 | 51,3 | 12,2 | 23,05 | 745 | 22,42 | 27,6 | 57,62 | 66,26 | 35,39 | 36,47 | 49,97 | 87,52 |
| 2 | 51,1 | 50,2 | 12,7 | 24,01 | 734 | 21,93 | 26,17 | 60,02 | 69,04 | 32,27 | 33,72 | 49,94 | 87,54 |
| 3 | 51,2 | 50,5 | 12,1 | 22,87 | 718 | 21,61 | 26,94 | 57,17 | 65,27 | 30,65 | 32,65 | 49,78 | 85,39 |
| 4 | 51 | 50,2 | 12,4 | 23,41 | 728 | 21,65 | 26,02 | 58,52 | 67,29 | 31,53 | 33,78 | 49,76 | 86,44 |
| 5 | 50,8 | 50,8 | 12,3 | 23,69 | 734 | 20,81 | 25,33 | 59,22 | 68,09 | 25,97 | 29,12 | 47,67 | 87,12 |
| ***Durchschnitt 51*** | | ***50,6*** | ***12,34*** | ***23,4*** | ***731*** | ***21,68*** | ***26,41*** | ***58,51*** | ***67,19*** | ***31,16*** | ***33,15*** | ***49,42*** | ***86,80*** |

**EN 317 Wasser Absorption und Dicken-Quellung ( UF ohne LCC )**

| | | | | | | | | | | | | |
|---|---|---|---|---|---|---|---|---|---|---|---|---|
| ***Durchschnitt 50,4*** | ***51*** | ***12,44*** | ***23,7*** | ***739*** | ***27,26*** | ***30,34*** | ***58,94*** | ***48,66*** | ***119*** | ***144*** | ***81,18*** | ***105,32*** |

**EN 319 Zugfestigkeit**

| Pos | Länge mm | Breite mm | Dicke mm | Gewicht g | spez. Gewicht kg/m³ | Kraft N | Dauer s | Zugfestigkeit N/mm² |
|---|---|---|---|---|---|---|---|---|
| Norm | | | | | | | | 0,45 |
| 1 | 51 | 51,3 | 12,2 | 23,05 | 745 | 1920 | 21,3 | 0,72 |
| 2 | 51,2 | 51,1 | 12,7 | 24,01 | 734 | 1867 | 20,1 | 0,68 |
| 3 | 51 | 51,4 | 12,1 | 22,87 | 718 | 1712 | 15,6 | 0,48 |
| 4 | 51,4 | 51 | 12,4 | 23,41 | 728 | 1831 | 19,8 | 0,56 |
| 5 | 51 | 50,3 | 12,3 | 23,69 | 734 | 1879 | 20,4 | 0,66 |
| ***Durchschnitt*** | ***51,1*** | ***51,2*** | ***16,47*** | ***23,4*** | ***731*** | ***1842*** | ***19,4*** | ***0,62*** |

### ANWENDUNGSBEISPIEL 5

### OSB ( PMDI+ 30% LCC; Einsatz von LCC zur Kostenreduzierung des Ansatzes.)

Auf einer Laborpresse wurden 18 mm 3-Schicht OSB Platten mit einem Bio-Bindemittel plus Additiv LCC nach dieser Erfindung hergestellt. Das Gewicht der Platte betrug 640 kg/m3. Der Leimauftrag erfolgte mittels Blender. Die Flakes wurden aus frischem Kiefernholz hergestellt und dem Labor zur Verfügung gestellt.

PMDI+ LCC Auftragsmenge betrug 5 % auf atro Holz, davon 30 % LCC.

Die Holzfeuchte nach Trocknung vor Beleimung betrug 3,5 %. Die Feuchte der Flakes nach Beleimung betrug 10 %.

Leimmenge: gesamt 5 % für Deck- und Mittelschicht, davon 30 % LCC Additiv = 22,4 kg PMDI und 9,6 kg Nass-Additiv LCC.
LCC mit 59,3 % Feststoffgehalt.
Pressfaktor = 8,0 sec/ mm
Presstemperatur = 230 °C
**EN 320 Biegefestigkeit**

| Pos | Länge mm | Breite mm | Dicke mm | Gewicht g | spez. Gewicht kg/m³ | Kraft N | Dauer s | Biegefestigkeit N/mm² | Elastizitätsmodul N/mm² |
|---|---|---|---|---|---|---|---|---|---|
| Norm | | | | | | | | 18 | 3500 |
| 1 | 370 | 51,1 | 18,89 | 222,91 | 643 | 416 | 37,1 | 26,17 | 3901,38 |
| 2 | 370 | 50,8 | 18,2 | 217,72 | 639 | 402 | 35,5 | 20,7 | 3879,37 |
| 3 | 370 | 51 | 18,58 | 220,6 | 641 | 411 | 40,1 | 25,22 | 3870,03 |
| 4 | 370 | 51,2 | 18,5 | 225,54 | 654 | 448 | 42,2 | 27,1 | 4128,34 |
| ***Durchschnitt*** | | ***51,1*** | ***16,49*** | ***211,69*** | ***644*** | ***419*** | ***38,7*** | ***24,04*** | ***3944,78*** |

**EN 317 Wasser Absorption und Dicken-Quellung**

| Pos | Länge mm | Breite mm | Dicke mm | Gewicht g | spez. Gewicht kg/m³ | Dicke | | Gewicht | | Quellung | | Absorption | |
|---|---|---|---|---|---|---|---|---|---|---|---|---|---|
| | | | | | | 2h mm | 24h mm | 2h g | 24h g | 2h % | 24h % | 2h % | 24h % |
| Norm | | | | | | | | | | | 15 | | |
| 1 | 51,1 | 51,2 | 18,89 | 30,95 | 643 | 22,42 | 22,6 | 53,29 | 57,44 | 18,6 | 19,64 | 72,18 | 85,58 |
| 2 | 51,1 | 51,1 | 18,2 | 30,23 | 639 | 21,93 | 22,17 | 53,19 | 57,04 | 20,49 | 21,81 | 75,95 | 88,68 |
| 3 | 51,2 | 51.1 | 18,58 | 30,63 | 641 | 21,61 | 21,94 | 52,65 | 56,27 | 16,30 | 18,08 | 71,89 | 83,17 |
| 4 | 51 | 51,2 | 18,5 | 31,32 | 654 | 21,65 | 22,02 | 52,63 | 56,83 | 17,02 | 19,02 | 68,03 | 81,14 |
| 5 | 50,8 | 50,8 | 18,45 | 30,19 | 648 | 20,81 | 21,33 | 50,75 | 56,09 | 12,79 | 15,6 | 68,10 | 85,78 |
| ***Durchschnitt 51*** | | ***51,1*** | ***18,52*** | ***30,66*** | ***665*** | ***21,68*** | ***22,01*** | ***52,5*** | ***56,73*** | ***17,04*** | ***18,83*** | ***71,23*** | ***84,87*** |

**EN 317 Wasser Absorption und Dicken-Quellung ( PMDI ohne LCC)**

| | | | | | | | | | | | | |
|---|---|---|---|---|---|---|---|---|---|---|---|---|
| ***Durchschnitt 51,3*** | ***51*** | ***18,45*** | ***31,22*** | ***661*** | ***21,52*** | ***22,08*** | ***33,7*** | ***39,3*** | ***16,8*** | ***20*** | ***14,6*** | ***35,3*** |

**EN 319 Zugfestigkeit**

| Pos | Länge mm | Breite mm | Dicke mm | Gewicht g | spez. Gewicht kg/m³ | Kraft N | Dauer s | Zugfestigkeit N/mm² |
|---|---|---|---|---|---|---|---|---|
| Norm | | | | | | | | 0,32 |
| 1 | 51 | 51,3 | 18,89 | 30,95 | 643 | 2070 | 20,3 | 0,61 |
| 2 | 51,2 | 51,1 | 18,2 | 30,23 | 639 | 2111 | 20,7 | 0,57 |
| 3 | 51 | 51,4 | 18,58 | 30,63 | 641 | 1988 | 18,4 | 0,62 |
| 4 | 51,4 | 51 | 18,5 | 30,32 | 654 | 2154 | 22,3 | 0,68 |
| 5 | 51 | 50,3 | 18,45 | 30,19 | 648 | 2105 | 22,6 | 0,65 |
| ***Durchschnitt*** | ***51,1*** | ***51,2*** | ***18,52*** | ***30,66*** | ***665*** | ***2085*** | ***20,8*** | ***0,63*** |

### ANWENDUNGSBEISPIEL 6

### Faserplatte HDF ( BioBindemittel + LCC )

Auf einer Laborpresse wurden 3 mm HDF Platten mit einem Bio-Bindemittel plus Additiv LCC nach dieser Erfindung hergestellt. Das Gewicht der Platte betrug 820 kg/m3.

Der Leimauftrag erfolgte mittels Blender. Die Fasern wurden aus frischem Kiefernholz hergestellt und dem Labor zur Verfügung gestellt.

Leimauftragsmenge betrug 11 % auf atro Holz.

Die Holzfeuchte nach Trocknung vor Beleimung betrug 4,5 %. Die Feuchte der Fasern nach Beleimung betrug 11 %.

Das eingesetzte ein komponentige Bindemittelgemisch hatte einen Feststoffgehalt von 60 %, davon 20 % Additiv LCC.

Leimmenge: 11 %, 94,6 kg Feststoff und 157,6 kg Nassleim

LCC incl Polysorbat mit 59,3 % Feststoffgehalt (31,4 kg Nass Additiv LCC ).

Zum Feststoffgehalt des Bindemittels zählen alle organischen und anorganischen Bestandteile des Leimes, einschließlich Glycerin.
Pressfaktor = 8,0 sec/ mm
Presstemperatur = 220 °C
**EN 320 Biegefestigkeit**

| Pos | Länge mm | Breite mm | Dicke mm | Gewicht g | spez. Gewicht kg/m³ | Kraft N | Dauer s | Biegefestigkeit N/mm² | Elastizitätsmodul N/mm² |
|---|---|---|---|---|---|---|---|---|---|
| Norm | | | | | | | | 27 | 2700 |
| 1 | 150 | 51,1 | 3,08 | 17,77 | 795 | 81 | 55,1 | 74,14 | 4215 |
| 2 | 150 | 50,2 | 3,12 | 17,95 | 822 | 76 | 53,5 | 72,7 | 4976 |
| 3 | 150 | 51 | 3,24 | 19,23 | 816 | 95 | 50,3 | 93,39 | 5234 |
| 4 | 150 | 51,7 | 3,09 | 18,31 | 835 | 101 | 59,2 | 95,6 | 5322 |
| ***Durchschnitt*** | | ***51,1*** | ***3,13*** | ***18,31*** | ***817*** | ***88*** | ***54,5*** | ***83,95*** | ***4936*** |

**EN 317 Wasser Absorption und Dicken-Quellung**

| Pos | Länge mm | Breite mm | Dicke mm | Gewicht g | spez. Gewicht kg/m³ | Dicke | | Gewicht | | Quellung | | Absorption | |
|---|---|---|---|---|---|---|---|---|---|---|---|---|---|
| | | | | | | 2h mm | 24h mm | 2h g | 24h g | 2h % | 24h % | 2h % | 24h % |
| Norm | | | | | | | | | | | 30 | | |
| 1 | 51,1 | 51,2 | 3,08 | 6,77 | 795 | 3,42 | 4,02 | 9,46 | 10,45 | 11,02 | 30,07 | 39,97 | 64,78 |
| 2 | 51,1 | 51,1 | 3,12 | 6,84 | 822 | 3,58 | 3,98 | 9,23 | 10,74 | 14,7 | 27,56 | 34,94 | 57,01 |
| 3 | 51,2 | 51,1 | 3,24 | 6,97 | 816 | 3,81 | 4,03 | 10,65 | 11,27 | 17,76 | 24,38 | 52,79 | 61,69 |
| 4 | 51 | 51,2 | 3,09 | 6,82 | 832 | 3,5 | 4,01 | 9,73 | 10,84 | 13,33 | 29,77 | 42,66 | 58,94 |
| 5 | 50,8 | 50,8 | 3,1 | 6,72 | 806 | 3,71 | 3,87 | 9,84 | 10,92 | 19,60 | 24,83 | 46,42 | 62,50 |
| ***Durchschnitt 51*** | | ***51,1*** | ***3,12*** | ***6,82*** | ***814*** | ***3,60*** | ***3,98*** | ***9,78*** | ***10,84*** | ***15,88*** | ***27,32*** | ***43,35*** | ***60,98*** |

**EN 317 Wasser Absorption und Dicken-Quellung (BioBindemittel ohne LCC )**

| | | | | | | | | | | | | |
|---|---|---|---|---|---|---|---|---|---|---|---|---|
| ***Durchschnitt 50,6*** | ***50,4*** | ***3,21*** | ***7,02*** | ***819*** | ***5,58*** | ***6,75*** | ***11,34*** | ***13,21*** | ***173*** | ***210*** | ***161*** | ***188*** |

**EN 319 Zugfestigkeit**

| Pos | Länge mm | Breite mm | Dicke mm | Gewicht g | spez. Gewicht kg/m³ | Kraft N | Dauer s | Zugfestigkeit N/mm² |
|---|---|---|---|---|---|---|---|---|
| Norm | | | | | | | | 0,7 |
| 1 | 51 | 51,3 | 3,08 | 6,77 | 795 | 2016 | 6,6 | 0,78 |
| 2 | 51,2 | 51,1 | 3,12 | 6,84 | 822 | 2235 | 7,1 | 1,18 |
| 3 | 51 | 51,4 | 3,24 | 6,97 | 816 | 1674 | 5,8 | 0,86 |
| 4 | 51,4 | 51 | 3,09 | 6,82 | 832 | 2286 | 6,7 | 1,32 |
| 5 | 51 | 50,3 | 3,1 | 6,72 | 806 | 2676 | 8,2 | 0,92 |
| ***Durchschnitt*** | ***51,1*** | ***51,2*** | ***3,12*** | ***6,82*** | ***814*** | ***2177*** | ***6,88*** | ***1,01*** |

**Kochtest nach EN 1087-1.**
16 mm Faserplatte MDF mit 720 kg/m3 Gewicht

| | Quellung | | Kochen + Querzug | |
|---|---|---|---|---|
| | 2 h | 24h | 2 h | 6 h |
| Norm MDF H | | 8% | > 0,1 N/mm2 | |
| UF | 122 | 184 | | |
| MUF (15 % Melamin) | 2,3 | 8,66 | -- | -- |
| UF + LCC | 31 | 36 | | |
| Protein-Bindemittel | 173 | 210 | -- | -- |
| Protein-Bindemittel + LCC | 3,75 | 9,5 | 0,18 | 0,07 |
| Protein-Bindemittel +LCC + Aquaveg 50A-1301 von EMULCO (Hydrowax) | 2,91 | 8,13 | 0,21 | 0,09 |

Soweit nicht anders angegeben beziehen sich alle Angaben in % auf Gew.-%

## Patentansprüche

1. Hydrophobierungsmittel für cellulosehaltige Materialien enthaltend
a. Phenolische Bioplymere;
b. Organische Säure;
c. Alkalisilikate;
d. Alkalihydroxid;
e. Wasser.

2. Hydrophobierungsmittel für cellulosehaltige Materialien nach Anspruch 1, weiterhin enthaltend ein Metallsalz, insbesondere ein Kupfersalz.

3. Hydrophobierungsmittel für cellulosehaltige Materialien nach Anspruch 1 oder 2, weiterhin enthaltend Organosilan.

4. Hydrophobierungsmittel für cellulosehaltige Materialien nach einem der vorigen Ansprüche weiter enthaltend ein Tensid, insbesondere ein nicht-ionisches Tensid, wie Polysorbat.

5. Hydrophobierungsmittel für cellulosehaltige Materialien nach einer der vorigen Ansprüche, enthaltend
a. Phenolische Biopolymere in einer Menge von 5 bis 50 Gew.-%;
b. Organische Säure in einer Menge von 1,5 bis 4,0 Gew.-%;
c. Alkalisilikate in einer Menge von 2,0 bis 6,0 Gew.-%;
d. Alkalihydroxid in einer Menge von 0,5 bis 5,0 Gew.-%;
e. Ggf. Metallsalz in einer Menge von 0,3 bis 3 Gew.-%;
f. Ggf. Organosilan in einer Menge von 1,0 bis 8,0 Gew. -%;
g. Ggf. Tensid in einer Menge von 2,5 bis 8,0 Gew. -%;
h. Wasser bis zu 100 Gew.-%.

6. Hydrophobierungsmittel für cellulosehaltige Materialien nach einem der vorigen Ansprüche, wobei die phenolischen Biopolymere ausgewählt sind aus der Gruppe der Lignine, insbesondere Organosolv- oder Kraft-Lignine.

7. Hydrophobierungsmittel für cellulosehaltige Materialien nach einem der vorigen Ansprüche, wobei die organische Säure ausgewählt ist aus einer organischen Säure mit einem pH-Wert < 3, insbesondere Carbonsäure einschließlich Zitronensäure, Milchsäure, Pikrinsäure, Essigsäure, Ascorbinsäure und Mischungen hiervon.

8. Hydrophobierungsmittel für cellulosehaltige Materialien nach einem der vorigen Ansprüche, wobei die Alkalihydroxide ausgewählt sind aus Natriumhydroxid- oder Kaliumhydroxid.

9. Hydrophobierungsmittel für cellulosehaltige Materialien nach einem der vorigen Ansprüche, wobei die Alkalisilikate Wasserglas, insbesondere Kalium- oder Natriumwasserglas ist.

10. Bindemittelzusammensetzung für cellulosehaltige Materialien enthaltend oder bestehend aus Hydrophobierungsmittel nach einem der Ansprüche 1 bis 10.

11. Bindemittelzusammensetzung für cellulosehaltige Materialien nach Anspruch 10, wobei das Basis-Bindemittel ausgewählt ist aus UF/MUF, PMUF, Protein Bindemittel oder Isocynat-basierende Bindemittel, insbesondere Proteinbindemittel auf Pflanzenbasis.

12. Bindemittelzusammensetzung für cellulosehaltige Materialien nach einem der Ansprüche 10 oder 11, wobei das Bindemittel weitere Additive, insbesondere mindestens eines aus der Gruppe von Hydrowachs, Fungizide, Brandschutzmittel, Geruchsstoffen, Farbmittel, Füllstoffe und Mischungen hiervon aufweisen kann.

13. Verbundwerkstoffprodukt erhältlich durch Binden eines cellulosehaltigen Ausgangsmaterials mit einem Bindemittel nach einem der Ansprüche 10 bis 12 und Formen zu einem Produkt, insbesondere wobei das Produkt eine Platte oder ein Formpressteil ist.

14. Verbundwerkstoffprodukt nach Anspruch 13, **dadurch gekennzeichnet, dass** das cellulosehaltige Ausgangsmaterial Holz oder einjährige Pflanzen, wie Holzfasern, Holzspäne, Holzstaub oder Holzmehl, Hackschnitzel, Strands, Furniere oder nach dem Scrimber-Verfahren aufbereitetes Material oder Recyclingmaterial ist.

15. Verfahren zur Herstellung eines Verbundwerkstoffprodukts, insbesondere eines Verbundwerkstoffprodukts nach einem der Ansprüche 13 bis 14, aus cellulosehaltigen Materials und einem Bindemittel nach einem der Ansprüche 10 bis 12, vorzugsweise bei einer Temperatur im Bereich bis 100 und 250 Grad Celsius, insbesondere bei einem Druck von 1 bis 250 bar, bevorzugt 10 bis 80 bar.
